Europäisches Patentamt

European Patent Office

Office européen des brevets

(19)

(11) Publication number : **0 551 155 A1**

(12) **EUROPEAN PATENT APPLICATION**

(21) Application number : **93200018.5**

(22) Date of filing : **06.01.93**

(51) Int. Cl.$^5$ : **C22B 7/02, C22B 3/14, C22B 15/00, C22B 19/28**

(30) Priority : **10.01.92 IT MI920023**

(43) Date of publication of application :
**14.07.93 Bulletin 93/28**

(84) Designated Contracting States :
**DE ES FR GB**

(71) Applicant : **B.U.S. ENGITEC SERVIZI AMBIENTALI S.r.l.**
**Viale Jenner 51**
**I-20159 Milano (IT)**

(72) Inventor : **Olper, Marco**
**Via Crescitelli 6**
**I-20052 Monza, Milan (IT)**
Inventor : **Fracchia, Pier Luigi**
**Via Napo Torriani 12**
**I-20124 Milan (IT)**
Inventor : **Maccagni, Massimo**
**Via S. Denis 65**
**I-20099 Sesto San Giovanni, Milan (IT)**

(74) Representative : **Appoloni, Romano et al**
**ING. BARZANO' & ZANARDO MILANO S.p.A.**
**Via Borgonuovo 10**
**I-20121 Milano (IT)**

(54) **Process for recovering zinc and lead from flue dusts from electrical steel works and for recycling said purified metals to the furnace, and installation for implementing said process.**

(57) Process for extracting metals, such as zinc, lead, copper and cadmium, from flue dusts coming from electrical furnaces for steel making, which process comprises :

(a) treating said flue dusts with an aqueous solution of ammonium chloride and sodium chloride, with zinc, cadmium and copper being dissolved as ammine-complexes, and lead being dissolved as a chlorocomplex ;

(b) separating the resulting solution from the solid residue ;

(c) treating the solution from (b) with zinc powder in order to precipitate, by substitution, nobler-than-zinc metals in the electrochemical series ;

(d) separating the solution from the precipitate obtained in (c) ;

(e) electrowinning zinc from the solution obtained in (d), in an electrolysis cell, with zinc being deposited at the cathode and oxygen developing at the anode ;

(f) treating further flue dusts from electrical furnaces with the zinc-depleted solution from (e) ;

(g) recycling the residue from (b) to the electrical furnace, in order to reduce iron oxide and fumigate the zinc contained therein, as zinc ferrite.

EP 0 551 155 A1

The electrical steel works (EAF) flue dusts, which may constitute, by weight, 1-2% of the batch charged to the furnace, are a difficult-to-solve problem, owing to several reasons: their great dispersibility; their contents of polluting components Pb, Cd, Cu, Cr; their rather large content of Zn; the furnace yield loss.

Many attempts were done in the past in order to recycle said flue dusts, in their entirety, during the feeding step, to the electrical furnace; unfortunalety, the results were at all unsatisfactory, because the build-up of Pb and Zn creates considerable problems concerning furnace operations and environmental hygiene. As a consequence, most of these flue dusts were disposed of, until the Authority, classifying them among toxic and noxious wastes, drastically reduced their disposal possibilities.

At present, some steel works prefer to send them to storage, under proper precautions, inside the areas they have destined for this purpose, waiting for the introduction of a treatment process which is satisfactory from the technical-environmental view point, and is economically acceptable.

The processes known from the prior art, including those already applied in industrial facilities, and those which have remained in pilot-plant or laboratory research step, can be subdivided into two categories.

The first category embraces the processes of thermal treatment in a reducing medium, which are performed in rotary furnaces, plasma furnaces, or flame furnaces.

For example, in Waelz-Berzelius process, the batch constituted by EAF flue dusts, mixed with coal or coke, calcium oxide and silica powders, is charged to a long rotary furnace and is gradually heated up to 1200°C; at this temperature, the partial reduction of iron and the complete reduction of Zn and Pb occur. The latter are vapourized and are recovered from condensers and dust removal equipment. The most widely diffused treatment in Europe should not be regarded as a method for recovering Zn and Pb (which, in fact, are only concentrated in Waelz flue dusts), but, on the contrary, as a means to prevent toxic residues from being disposed of. The metals recovered from flue dusts contribute to a some extent to cover the expenses of treatment, which requires large energy consumptions.

In order to save energy, according to Japanese HTR process the flue dusts are fed to the highest-temperature (1400°C) region of furnace, in which the conditions are such as not to cause iron oxides to be reduced.

Plasmadust process, applied in Sweden, uses a nontransferred plasma-arc obtained by causing a gas to flow through the electrical arc maintained between two electrodes installed inside the tuyeres of a metallurgical furnace fed from the top with coke. The pelletized mixture of EAF powders, coal and flux, is injected into the flame of plasma torch.

Iron oxides are reduced and converted into cast iron, Zn and Pb are reduced and volatilized, and are collected in the metal state in an external condenser. Calcium oxide and silica convert the other components of flue dusts into slag.

Inmetco process is applied in an U.S. facility: the batch (a pelletized mixture of EAF flue dusts, coal and fine coke) is reduced inside a rotary beam furnace: from the flue dust of this furnace, Zn- and Pb-rich dusts are obtained.

The pre-reduced pellets are then charged, together with scrap and flakes, to a submerged-arc furnace, wherein the reduction is completed, yielding an iron alloy which contains most of Cr, Ni, Mo contained in flue dusts.

Tetronics process consists is injecting EAF flue dusts, together with the flowing gas, into the torch installed in furnace roof, so that said flue dusts may fall into the hot region of plasma. Zn and Pb, reduced and volatilized, go into the flue dusts which are recovered in a hose filter; Cr, Ni, Mo and Mn are recovered in the molten metal.

Tibur Metals process uses an expanded-arc plasma: the plasma region is created above the molten metal, by means of an arc discharge between graphite electrodes. Reactions and results are analogous to those as of the foregoing process.

HRD's F.R.P. process (Flame Reactor Process) produces flue dusts enriched with zinc, lead and cadmium, does not cause the reduction of iron and, as a byproduct thereof, an inert slag is obtained, which is useful for road making.

All the processes belonging to the above cited first category require that large amounts of flue dusts are available, and involve massive investments: the existing facilities generally operate at a regional level, and are used to process flue dusts coming from a plurality of steel works. The products are flue dusts enriched with Zn, Pb, Cd, which must be submitted to a further processing, and an inert slag to dispose of.

The second category contains the treatment processes by hydrometallurgical route. The selective leaching by means of chemical agents led in the past to a large number of patents, only a few of which have been developed at least up to the pilot plant level.

Among the most extensively studied leaching solutions, there are sulfuric acid and hydrochloric acid, sodium hydroxide and ammonium hydroxide, ammonium salts, and so forth.

According to Amax process, a double attack with $H_2SO_4$ is carried out so that, beside Zn, a considerable amount of Fe is dissolved, and has then to be precipitated. The treatment blocks all pb inside the residue, so the problem of the toxicity of the end product remains unsolved.

U.S. patent No. 3,743,501 separately extracts Pb and Zn by means of a double leaching: the first leaching takes place inside an autoclave, at a high temperature, with an average concentration of NaOH in order to dissolve Pb; the second leaching is carried out with a more concentrated NaOH solution (400 g/l) at boiling temperature, under the atmospheric pressure, in order to dissolve zinc. The method is applied to residues rich in in and Pb, but, due to economic reasons, it cannot be applied to EAF flue dusts with low contents of recoverable metals.

U.S. patent 4,071,357 leaches the flue dusts with a concentrated solution of ammonia and $CO_2$, extracting only Zn, purifies the solution with Zn in order to cement the small amounts of dissolved Cu, Cd and Pb impurities, submits the solution to a steam distillation in order to precipitate basic zinc carbonate, and then washes and calcines the latter until ZnO is obtained. The purity of recovered product is fairly good: unfortunately, all Pb and most Cu remain in the residue, making it impossible said product to be recycled to the electrical furnace.

F.J. Palumbo in R.I. 8995 of Bureau of Mines attains a good extraction of in from the flue dusts of copper converter, using $NH_4Cl$ and $NH_4OH$ as the leaching means: the extraction of Pb is nearly zero, and Cu extraction takes place to a very low extent.

R.C. Gabler in R.I. 9199 of Bureau of Mines uses, for the same flue dusts, $(NH_4)_2CO_3$ and $NH_4OH$, extracting Zn with good yields. The extraction of Pb is very poor.

SERH process is one of most recent implementations at industrial level of a patent: At St.-Florentine (France), a facility was built, which is capable of treating, by the hydrometallurgical route, 12,000 tons/year of EAF flue dusts.

A concentrated alkaline solution (240 g of NaOH/litre) is used, which partially dissolves Zn and Pb, and leaves iron unchanged. After removing Pb and Cd from the solution, by cementation with Zn powder, the resulting zincate is submitted to electrolysis between nickel anodes and Zn cathodes, with zinc powder (suitable far anticorrosion paints) being obtained as the product, and NaOH being regenerated. The residue from the first leaching is re-collected with a more concentrated NaOH solution (420 g/l), which is capable of dissolving also most Zn contained in zinc ferrite.

Due to the strong causticity of the leaching solutions, serious problems of decantation and filtration exist. The losses of NaOH are large owing to the presence of $SiO_2$ and Cl in the flue dusts, and owing to the difficulties of washing the leaching residues.

Pb is extracted to an extent of 85%; Cu to an extent of 15-30%, so recycling the end residue is problematic.

The purpose of the present invention is of supplying the industry of steel produced by electrical furnaces, with a method for extracting and recovering -- as metals -- Zn and Pb concentrated in flue dusts, and removing from said flue dusts other polluting metals (Cd and Cu), so that said flue dusts may be recycled to the electrical furnace.

In order to achieve the above purpose, and also other advantages which are better disclosed in the following, the present invention proposes a process for extracting metals, such as zinc, lead, copper and cadmium, from flue dusts coming from electrical furnaces for steel making, characterized in that said process comprises:

(a) treating said flue dusts with an aqueous solution of ammonium chloride and sodium chloride, with zinc, cadmium and copper being dissolved as ammine-complexes, and lead being dissolved as a chlorocomplex;

(b) separating the resulting solution from the solid residue;

(c) treating the solution from (b) with zinc powder in order to precipitate, by sunstitution, nobler-than-zinc metals in the electrochemical series;

(d) separating the solution from the precipitate obtained in (c);

(e) electrowinning zinc from the solution obtained in (d), in an electrolysis cell, with zinc being deposited at the cathode and oxygen developing at the anode;

(f) treating further flue dusts from electrical furnaces with the zinc-depleted solution from (e);

(g) recycling the residue from (b) to the electrical furnace, in order to reduce iron oxide and fumigate the zinc contained therein, as zinc ferrite.

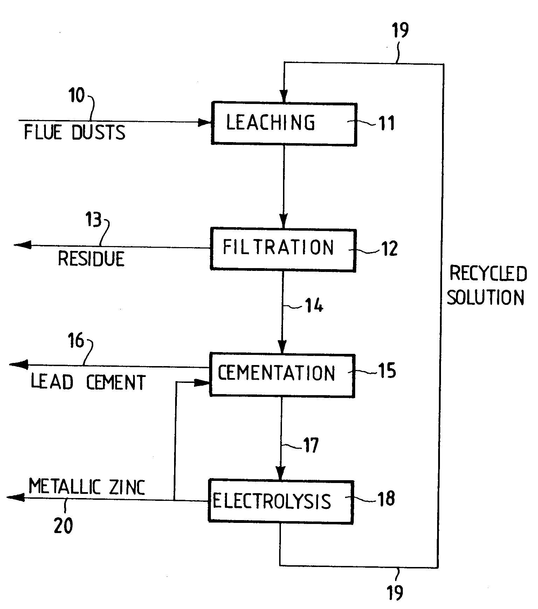

In order to better understand the present invention, a form of practical embodiment thereof is disclosed by referring to the figure of the accompanying drawing, which schematically represents the flow chart thereof.

According to such figure, for the extraction of the heavy metals from EAF flue dusts 10 (either freshly produced, or enriched by a recycle of previously produced flue dusts to the furnace), said flue dusts are treated in 11 with a medium-concentration solution of $NH_4Cl$ (150-250 g/l, preferably 200 g/l), which has a high solvent power for Zn, Cu and Cd compounds. Said solution also contains a high concentration (50-200 g/l, preferably 100 g/l) of NaCl, acting as an active solvent for Pb compounds. Iron and silica are not dissolved.

By operating at temperatures comprised within the range of from 50 to 90°C (preferably 60-70°C) for times comprised within the range of from 1 to 2 hours (preferably of 1 hour), the solution is capable of extracting

3

practically all Pb and Cd, and most Cu, whilst, as regards Zn, only Zn not linked to iron as ferrite is extracted (approximately 1/3 of flue dust contents).

After this extraction, and filtration 12, a residue 13 remains, which corresponds to approximately 55-60% of processed flue dusts and contains all iron and that portion of Zn which is present as ferrite. This residue, after being preliminarily washed with water, dried and pelletized with coal, can be recycled to the electrical furnace. Under the operating conditions of the latter, zinc ferrite is decomposed yielding zinc oxide which goes into the flue dusts, and $Fe_2O_3$, which is reduced to metal Fe.

Before being fed to Zn electrowinning cell, the zinc-containing solution 14 obtained by leaching, and separated by filtration, has to be purified from nobler-than-Zn metals (Pb, Cd and Cu). For that purpose, in 15 the amount of Zn powder is added to it, which is necessary for cementing the above said impurities. By operating at same leaching temperature, cementation is complete within a 15-20 minutes time.

The precipitated product 16 is essentially constituted by spongy Pb containing low levels of Cd and Cu.

This filtered-off product can be sold to secondary Pb refineries.

The deposition of Zn from the purified solution 17 takes place in an electrolysis cell 18 of the membrane type, causing electrical current to flow between a stainless-steel cathode and an anode suitable for oxygen development.

A membrane of cationic type keeps the catholyte (i.e., the purified zinc-containing solution) separated from the anolyte (an aqueous solution of an oxyacid, e.g., 100-200 g of $H_2SO_4$/litre).

The cathodic structure to be used may consist of

(a) a flat cathode for low current densities;

(b) a flat cathode with air injection system, which enables the current density to be increased;

(c) a rotary cylindrical cathode, which enables the highest current density values to be reached, although the electrolysis is carried out with low zinc levels.

The zinc-containing solution is fed to the cathodic compartment, in an amount corresponding to the electrical current flowing through the cell. Thus, in is deposited from a constant-pH, constant-Zn-level solution, and is collected in 20. At the anode oxygen develops.

The solution 19, depleted from zinc, leaving the cathodic compartment, is regenerated, so as to be suitable for use for leaching further flue dust in 11.

The chemical reactions of the process according to the invention basically are the following:

In step (a), the leaching reactions:

$$2 \, ZnO + 4 \, NH_4Cl \rightarrow Zn \, (NH_3)_4Cl_2 + ZnCl_2 + 2 \, H_2O \quad x \, PbO + y \, NaCl \rightarrow [PbO]_x*[NaCl]_y$$

In step (c), the reactions of purification by cementation:

$$Pb^{++} + Zn \rightarrow Zn^{++} + Pb$$
$$Cu^{++} + Zn \rightarrow Zn^{++} + Cu$$
$$Cd^{++} + Zn \rightarrow Zn^{++} + Cd$$

In step (e), the electrolysis:

$$Zn \, (NH_3)_4Cl_2 + ZnCl_2 + 2H_2O \rightarrow 2Zn + 4NH_4Cl + O_2$$

By referring to the form of practical embodiment depicted in the accompanying flow chart, a non-limitative example of implementation thereof is reported in the following.

**Example**

100 g of EAF flue dusts, having the composition:

| | |
|---|---|
| Zn | 24.6 % |
| Pb | 6.1 % |
| Fe | 18.7 % |
| Cu | 0.27 % |
| Cd | 0.04 % |

was submitted to a 1-hour leaching, with stirring, at 70°C, with 1 litre of a solution having the following composition:

| | |
|---|---|
| $Zn^{++}$ | 5.3 g/l |
| $NH_4Cl$ | 200 g/l |

NaCl 100 g/l

The reaction mixture was filtered when hot, the filter cake was washed on the filter with 50 ml of boiling $H_2O$, and 1 litre of a solution was obtained, which contained:

$Zn^{++}$ 20.5 g/l

$Pb^{++}$ 5.7 g/l

$Cu^{++}$ 0.134 g/l

$Fe^{++}$ 0.6 mg/l

The insoluble residue, washed and dried, weighed 57 grams, and contained:

Fe 32.8 %

Zn 16.5 %

Pb 0.7 %

The volume of 50 ml of washing liquor served to compensate for evaporation losses.

(This residue can be pelletized with coal, and recycled to EAF).

The leaching solution, kept hot, was admixed with 3 g of zinc powder, and the resulting mixture was kept stirred for 20 minutes.

The cementation mixture was filtered when hot. The precipitated-off cement was constituted by a Pb sponge approximately containing 2% of Cu. Its weight was of 7 g.

After cementation, the solution was fed to the cathodic compartment of an electrolysis cell with cationic membrane, with rotary cathode, the surface-area of which was of 0.64 $dm^2$.

The solution was electrolysed at 9 A and 4 V, for 2 hours.

15.3 g of Zn in coherent form was obtained.

The leaving electrolyte still contained 5.2 g/l of $Zn^{++}$, and, with the possible make-up of reactants, was ready for use for leaching a further batch of EAF flue dusts.

More generally, one might observe that according to the present invention, Zn, Pd,Cd, Cu,leaching is maximized when a hot, aqueous. mixed solution of $NH_4Cl$ and NaCl is used.

The leaching residue corresponds to 55-60% of the flue dusts submitted to the process, and -- as it is deprived of the heavy metals which made it difficult it to be recycled in its entirety -- said residue can be added to the raw material fed to the electrical furnace, where also Zn ferrite is decomposed into ZnO, which is blocked by the filtration devices, and $Fe_2O_3$, which is reduced to metal Fe.

The zinc-containing solution purified by cementation can be submitted to electrolysis in a membrane cell, in order to use an anolyte which is constituted by a diluted oxyacid, the evolution of $Cl_2$ at the anode being thus prevented, and at the cathode, Zn being obtained in coherent form, with a high enough purity for zinc-coating uses in steel and iron industry.

Summing-up, the advantages of the process of the invention are the following:

The EAF steel making process no longer produces wastes to dispose of.

The leaching solution is a low-cost one, can be purified by cementation and is regenerated during zinc electrowinning, so it can be recycled in its entirety.

The leaching means is selective as regards iron, which practically is not dissolved.

The polluting heavy metals (Pb, Cd and Cu) are nearly completely removed from the flue dusts, so the end residue can be recycled to the furnace without toxicity problems.

The use of the rotary-cathode cell makes it possible a high cathodic current density to be used, with a coherent deposit being obtained in spite of the low level of Zn in the electrolyte.

The use of the flat cathode with an air injection device is a technology which makes it possible results to be obtained, which are analogous to those obtained from rotary cathode technology.

The use of a cell with the anodic compartment separated from the cathodic compartment by means of a cationic membrane enables diluted oxyacids to be used as the anolyte -- and hence, $O_2$ to develop on the anode, in spite of the high Cl concentration in the leaching solution.

## Claims

1. Process for extracting metals, such as zinc, lead, copper and cadmium from flue dusts coming from electrical furnaces for steel making, characterized in that said process comprises:

   (a) treating said flue dusts with an aqueous solution of ammonium chloride and sodium chloride, with zinc, cadmium and copper being dissolved as ammine-complexes, and lead being dissolved as a chlorocomplex;

   (b) separating the resulting solution from the solid residue;

   (c) treating the solution from (b) with zinc powder in order to precipitate, by substitution, nobler-than-zinc metals in the electrochemical series;

(d) separating the solution from the precipitate obtained in (c);

(e) electrowinning zinc from the solution obtained in (d), in an electrolysis cell, with zinc being deposited at the cathode and oxygen developing at the anode;

(f) treating further flue dusts from electrical furnaces with the zinc-depleted solution from (e);

(g) recycling the residue from (b) to the electrical furnace, in order to reduce iron oxide and fumigate the zinc contained therein, as zinc ferrite.

2. Process according to claim 1, characterized in that it comprises the further steps of addition of coal powder and pelletization of the residue, which is prevailingly constituted by iron oxide obtained in said step (b).

3. Process according to claim 1, characterized in that in said step (a), the concentration of ammonium chloride is comprised within the range of from 100 to 300 g/l and the concentration of sodium chloride is comprised within the range of from 50 to 200 g/l.

4. Process according to claim 1, characterized in that in said step (a) the leaching temperature is comprised within the range of from 30 to 90°C.

5. Process according to claim 1, characterized in that in said step (e), zinc is deposited on a stainless-steel cathode in coherent form.

6. Process according to claim 1, characterized in that in said step (e), said electrolytic cell comprises a cationic membrane which separates the cathode from the anode.

7. Process according to claim 1, characterized in that in said step (e), the liquid which fills the anodic chamber is an aqueous solution of an oxyacid.

8. Process according to claim 1, characterized in that in said step (e) the anode is constituted by a conductive material which is inert towards the chemical attack by the selected oxyacid, activated with a layer of $PbO_2$ or Pt for oxygen evolution.

9. Installation for practically embodying a process according to claim 1, characterized in that said facility comprises means for performing said steps (a), (b), (c), (d), (f), (g), as well as an electrolytic cell for performing said step (e).

EP 0 551 155 A1

**European Patent Office**

## EUROPEAN SEARCH REPORT

Application Number

EP 93 20 0018

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 510 141 (S. FERLAY) <br> * page 1, line 33 - page 8, line 15; claims 1,6-9 * | 1,2,5,8 | C22B7/02 <br> C22B3/14 <br> C22B15/00 <br> C22B19/28 |
| | --- | | |
| A | FR-A-2 291 280 (W.H. BURROWS) <br> * page 1, line 19 - page 9, line 19; claims 1-4,7-10 * | 1,3,4,9 | |
| | --- | | |
| A | US-A-4 096 045 (H. AHONEN ET AL) <br> * column 2, line 38 - column 3, line 53; claims 1-8,17 * | 1,3,4 | |
| | ----- | | |
| | | | **TECHNICAL FIELDS SEARCHED (Int. Cl.5)** |
| | | | C22B |

The present search report has been drawn up for all claims

| Place of search | Date of completion of the search | Examiner |
|---|---|---|
| THE HAGUE | 23 FEBRUARY 1993 | BLASBAND I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

8